(19) Europäisches Patentamt
European Patent Office
Office européen des brevets

(11) **EP 2 620 421 A2**

(12) **EUROPEAN PATENT APPLICATION**

(43) Date of publication:
**31.07.2013 Bulletin 2013/31**

(51) Int Cl.:
***C04B 41/86*** (2006.01)   ***C03C 8/14*** (2006.01)

(21) Application number: **13152347.4**

(22) Date of filing: **23.01.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **24.01.2012 ES 201230096**

(71) Applicant: **Vidres S.A.**
**12540 Villarreal, Castellón (ES)**

(72) Inventors:
• **Cabrera Ibáñez, Maria José**
**12540 Villlarreal (ES)**

• **Montíns Nebot, Víctor**
**12540 Villarreal (ES)**
• **Solsona Monzonís, Daniel**
**12540 Villarreal (ES)**
• **Sala Iniesta, Juan Miguel**
**12540 Villarreal (ES)**

(74) Representative: **Soler Lerma, Santiago**
**Iniciativa y Registro Operativo S.L.**
**International Department**
**C/Poeta Querol nº1 pta 10**
**46002 Valencia (ES)**

(54) **Coating for ceramic bodies**

(57)    Coating for ceramic bodies that comprises in its composition a mixture of oxides obtained from frits, raw materials, additives, colouring agents and, as substantial elements of this composition, some particles with different expansion coefficients that can present phase changes in the firing stage and have a different morphology and particle size between 20 and 500 microns, although a particles size from 50 to 350 microns is preferred, wherein the composition of these particles comprises at least one of the following types of oxides: ceramic oxides such as zinc oxide, silicon oxide, zirconium oxide, yttrium oxide, halfnium oxide or cerium oxide.

Figure 1

EP 2 620 421 A2

## Description

The present invention relates to a coating for ceramic bodies and to the body obtained by applying said coating, which has the characteristic that after the firing process microcracks are formed in said coatings, providing aesthetic features similar to those present in 'iris quartz' or 'rainbow quartz'.

The present invention belongs to the sector of the ceramic industry, specifically that of materials used to coat ceramic bodies.

## BACKGROUND OF THE INVENTION

Coating ceramic bodies provides these with decoration or technical features that allow differentiating them and providing added value.

Iridescence, a phenomenon by which the tone of the light changes according to the angle from which a surface is observed, is one of the most beautiful phenomena and is due to the interaction of the light with certain inclusions or structural defects in the materials.

The multicolour effect produced by iridescence is caused by diffraction when white light passes through small gaps, such as pores or notches, or through thin layers of material with different indices of refraction, as they act as prisms separating white light into the different colours of the spectrum.

It takes place when light enters a medium in which multiple reflections occur due to the presence of many semitransparent surfaces, where phase changes and interference of the reflections modulate the light, amplifying or attenuating the different frequencies.

When to light waves meet in space, if they have the same wavelength they can interact, reinforcing each other if they are in phase of cancelling each other.

If the peak of a wave coincides with the peak of the other wave, the waves are said to be in phase, obtaining a maximum amplitude as the sum of the amplitudes of the individual waves, leading to constructive interference.

When the peak of one wave coincides with the trough of another, the opposite effect occurs, known as destructive interference.

The wavelengths of a colour bounce off in different lines, coinciding or overlapping with reflections, thereby losing some colours and reinforcing others, depending on the angle of observation.

This iridescence phenomenon is present, among others, in minerals such as Labradorite, agates or opals.

Some patents cite different methods for obtaining an 'iris' or 'rainbow' decorative effect.

Patent JP200034145 uses a surface with glass spheres covered in a film of titanium dioxide.

Patent JP7149585 proposes polishing certain areas of tiles subsequently coating them with a metallic resin.

Patent JP5269953 relates to the use of a transparent film to which particles are added of gold, silver, aluminium, mica and ceramic, following by a layer of adhesive.

Patent CN101973711 describes the preparation of a glazing from an organic medium with a soluble metallic compound and an organic adhesive applicable to ceramic, porcelain and other substrates to obtain a thin metallic layer with iridescence or rainbow-like aesthetic effects.

In Patent KR20040080628 this type of effect is achieved on ceramic tiles with the aid of a plasma fitted with titanium electrodes.

There are other minerals in which iridescence actually reveals a defect, such as in iris quartz or rainbow quartz, where the presence of microscopic cracks or notches are responsible for the beautiful appearance of these types of quartz.

Quartz is the most widely available mineral in nature, consisting of silicon oxide.

When its colorless variety (rock crystal) presents a diffuse and fine fracturing, iridescence can appear due to interference phenomena between incident light and small pockets of gas or liquids contained in the cracks; this is known as iris quartz.

If the fracturing is considerable, it can behave as an optical prism that breaks down light into its basic colours.

Quartz crystals can present very fine fissures or microcracks, often filled with air, that can reflect light passing through them to both sides.

If the width of these cracks has the same order of magnitude as the wavelength of the incident light, the reflected rays interfere (eliminating part of the spectrum so that the reflected light is multi-coloured).

The colour depends on the width of the crack and the angle at which the light passes through it, so that as the width of these cracks is not the same at all points, reflections with different colours as in a rainbow occur, leading to iridescence.

Other patents are known relating to obtaining microcracks, albeit different from those sought herein.

Patent WO2006045130 intends to generate microcracks in order to cut glass.

Patent ES2168148 describes a process for creating a desired fracture point in a glass body that involves creating a fracture ring by generating microcracks in said area using exposure to laser radiation.

Other works assume that microstructures having residual microcracks are useful in situations requiring resistance to thermal shock and increase the fracture strength of such materials.

Thus, for example, patent WO2011150145 describes a porous ceramic body with a honeycomb structure meant to be used as a filter for combustion gases in automobiles.

Said ceramic body is a cordierite matrix subjected to heat treatments to produce controlled microcracks and changes in the expansion coefficient of the material, in order to increase the fracture strength of these materials.

Patent US4775648 describes sintered and fired ceramic bodies for use as refractory materials in which a system is sought of uniformly distributed microcracks in said ceramic bodies.

Patent US4506024 describes the process for production of ceramic bodies used in the construction of engineering parts that will be subjected to high temperatures that require a high density and considerable fracture strength.

In order to produce these bodies it considers the use of a ceramic matrix preferably containing aluminium oxide, mullite, spinel, silicon nitride, yttrium oxide and/or zirconium oxide partially stabilised with magnesium oxide and/or yttrium oxide, free of microcracks, in which the zirconium dioxide is predominantly in tetragonal form, in which are incorporated some compression areas in the form of agglomerates formed by the ceramic matrix and at least one phase of another ceramic material dispersed in the ceramic matrix, consisting of zirconium dioxide particles, predominantly having monoclinic crystallisation at ambient temperature.

The ceramic body is formed by mixing, pressing and sintering processes.

During the sintering process, due to the phase transformations of the zirconium dioxide particles, the microcracks are generated which increase the fracture strength of the material.

## DESCRIPTION OF THE INVENTION

The present invention intends to obtain ceramic parts with a surface coating having aesthetic effects similar to those of iris quartz, for which compositions and processes will be sought for obtaining microcracks.

In ceramic materials, microcracks are initiated by temperature changes during cooling as a result of an increase in residual stress, mainly caused by the anisotropic thermal expansion of the materials and by the phase transformations associated with volume changes.

**a) Formation of microcracks due to the residual stress caused by phase transformations or changes.**

These transformations lead to a reordering of atoms associated with volume changes.

The temperature changes that take place during firing lead to changes in the crystalline structure of the materials, changing interatomic distances and the amplitude of atomic vibrations; the initial crystalline structure of the material is no longer stable and a new more stable structure is reached.

Materials with the same chemical composition but different crystalline structure are known as polymorphs, and the change from one structure to another is known as a polymorphic transformation.

Depending on the type of changes that take place in the crystal, two types of transformations can be differentiated: displacive and reordering or diffusional (reconstructive).

In the case of displacive transformations, all atoms of the crystal are displaced at the same time by a distance with a magnitude not greater than the interatomic distance, resulting in an alteration of the entire crystalline structure, so that there is a change in the bond angles but the bonds are not broken.

These transformations take place at a specific temperature, occur quickly and are accompanied by a change in volume.

**b) Microcracks due to anisotropic thermal expansion.**

Microcracks occur around the limits or borders between grains, starting with a critical grain size, and are due to the different thermal expansion coefficients of the materials.

The differences in thermal expansion coefficient give rise to microcracks in the firing process of ceramic materials; in general, these are the result of internal stresses between different grains induced by deformations incompatible with phase transformations and the anisotropy of the thermal expansion, so that the larger the grain size the more microcracks will appear.

The elasticity module, thermal expansion coefficient and thermal conductivity are variable properties that mainly depend on the grain size of the particles that make up the material.

The formation of microcracks in ceramic materials with non-cubic crystalline structure depends on the microstructure.

For each material, there is a critical grain size under which no microcracks are formed.

The tensions created in a piece of a material subjected to a sudden temperature change depend on both the external conditions imposed and on the product $E \cdot \alpha$ of the material.

The theory that describes the system of tensions around an isolated particle in an infinite isotropic medium due to the thermal expansion coefficients of the particle and the matrix is well established.

A spherical particle will be subjected to a pressure P which, for low particle concentrations, is given by the formula:

$$P = \frac{\Delta\alpha \cdot \Delta T}{\frac{(1+\nu_m)}{2 \cdot E_m} + \frac{(1-2\nu_p)}{E_p}}$$

Where $\Delta\alpha$ is the difference between the expansion coefficients of the particle, p, and the matrix, m , $\Delta T$

is the difference between the temperature at which there is no tension relaxation and the temperature considered, $v_m$, $v_p$ and $E_m$, $E_p$ are the Poisson coefficient and elasticity module of the matrix and the particles, respectively.

The sign of the tensions created depends on whether the contraction of the particles during cooling is greater than or smaller than that of the matrix.

In materials with $\alpha_p > \alpha_m$ the particle is subject to traction and microcracks form around the particle.

In materials with $\alpha_p < \alpha_m$ the particle is subject to compression and radial microcracks develop.

This type of microcracks is more damaging for materials as relates to their fracture strength, as they can coalesce and give rise to defects in the matrix.

Although the equation shows that the magnitude of the thermal tensions is independent of particle size, it has been observed experimentally that microcracks only appear beyond a certain particle size.

The critical particle size can be estimated by an energy balance criterion of the same type as that used by Cleveland and Bradt (J. Amer. Cer. 61:478 (1978)) to calculate $d_{cr}$ in non-cubic materials: for a microcrack to be created, the deformation elastic energy accumulated in the particle, E , must equal the energy needed to create the two new surfaces of the microcrack, $2 \cdot \gamma_f$,

Due to the anisotropy of the thermal expansion, two limit situations are considered: **Case I : $\alpha_p > \alpha_m$**

In this case the particles are subjected to traction, so that the microcracks will form around them. Assuming:

$\alpha_p$ = Value of the average crystallographic thermal expansion coefficient of the particle
$\alpha_m$ = Typical value of the thermal expansion coefficient of the matrix in which the particle is present.

Assuming that a microcrack forms around the particle. For spherical particles, the equation will be given by:

$$E_{total} = -E \cdot \frac{4}{3}\pi \cdot r^3 + 2 \cdot \gamma_f \cdot 4 \cdot \pi \cdot r^2$$

where r is the particle radius, $2 \cdot r = d_{cr}$ beyond which microcracks will form.

**Case II : $\alpha_p < \alpha_m$**

In this case the particles are subjected to compression, so that radial microcracks will form.

The thermal tensions caused in a piece of a material subjected to a sudden temperature change are proportional to the product of the thermal expansion coefficient and the elasticity module.

Studies have been performed on the origin of spontaneous microcracks due to anisotropic thermal expansion or dilation of materials and their effect on the physical properties of these materials.

In polycrystalline ceramic materials, the anisotropic thermal dilation or expansion of the granules increases residual stress in the cooling stage, this residual stress causing the spontaneous appearance of microcracks, initially around the border of the limits between granules. ("Microcraking in Ceramics Induced by Thermal Expansion or Elastic Anisotropy ", V. Tvergaard and J.W. Hutchinson. Journal of the American Ceramic Society, Vol. 71, №. 3 March 1988).

Assuming that the different grains are elastically isotropic in a polycrystalline aggregate, it is deduced that the microcrack is mainly caused by the residual stress produced in the cooling stage of the materials.

Most ceramic materials have a limit temperature under which stress relaxation processes can cause microcracks.

A great deal of research has shown that these microcracks are highly dependent on grain size. Materials with a fine particle size do not present microcracks, as the residual stress caused by anisotropic thermal expansion is not enough to nucleate the microcracks.

Specifically, there is a critical particle size under which the microcrack does not appear and above which it appears spontaneously.

Secondly, microcracks generated spontaneously are mainly produced around the limits or borders between granules.

According to these studies, the most important parameters affecting the critical grain size for production of microcracks are the difference between thermal expansion coefficients and the temperature drop.

Other authors do not assume that granule elasticity is isotropic (constant in any direction) but instead anisotropic (with variation of characteristics or properties depending on the direction), and include this anisotropic effect in the studied models.

Depending on the combination between elasticity and thermal anisotropy and the orientation of the granules in the polycrystalline aggregate, it is possible to improve or reduce the stress in the grain border.

If elastic anisotropy increases the residual stress resulting from thermal contraction, the material can be fractured with a smaller particle size than that required when considering only thermal expansion anisotropy.

In addition, there are numerous studies that use mathematical models to conclude that the initiation of microcracks depends on granule geometry and the relative orientations of their angles.

For example, in ceramic materials such as porcelain, during cooling the low thermal expansion coefficient of the vitreous stage compared to that of the quartz particles causes radial tensions that can give rise to the formation of microcracks between these two components.

In these cases, when the size of the quartz particles is smaller, the ease with which microcracks can appear increases, being displaced to lower temperature values, but if the particles size is too fine no microcracks are observed.

As described above, the object of the present invention is to obtain ceramic pieces that have aesthetic effects similar to those of iris quartz, seeking compositions and methods that allow obtaining microcracks which do not have as a goal increasing the fracture strength of the material, pursuing only to imitate an aesthetic effect.

The stages involved in obtaining the ceramic bodies object of the present invention are:

a) Preparation of homogenous mixtures of the components of the ceramic coatings.
b) Application of these coatings to ceramic bodies
c) Firing in an industrial kiln at temperatures between 1100-1250ºC for 38-120 minutes the ceramic bodies formed with the deposited ceramic coatings containing the elements of the mixtures in the required proportion on the ceramic support.

The present invention is applicable in general to any ceramic body, and specifically to tile-like ceramic materials for coating and decorating ceramic tiles used for pavement and cladding obtained by single or double firing, structural ceramic, roof tiles, bathroom tiles and artistic ceramic.

The coating comprises in its composition a mixture of oxides obtained from frits, raw materials, additives, colouring agents and, as substantial elements of this composition, some particles with different expansion coefficients that can present phase changes in the firing stage and have a different morphology and particle size between 20 and 500 microns, although a particles size from 50 to 350 microns is preferred.

The composition of said particles comprises at least one of the following types of oxides: ceramic oxides such as zinc oxide, silicon oxide, zirconium oxide, yttrium oxide, halfnium oxide or cerium oxide.

The particles are preferably ceramic spheres with a zirconium oxide content greater than 50 % by weight, ceramic spheres of zirconium oxide stabilised with yttrium oxide, ceramic spheres of zirconium oxide stabilised with cerium, or mixtures thereof.

The mixtures as described can be in the form of powder, suspension in an organic or inorganic medium, frit, granulate, palletised, sintered or atomised, and are applied on the ceramic bodies by deposition on the ceramic wafer using any of the commonly used techniques in the ceramic tile manufacturing industry, which by way of example and in a non-limiting sense include: enamelling by discs, bell jar, airbrush, pulverisation, immersion, serigraphy applications using flat screens, rotary machines, injection machines, dry application before or after the pressing stage and subsequent firing in a fast-firing kiln.

The firing stage will depend on the ceramic support to coat; no specific adjustment is required in the temperatures or firing times of the cycles commonly used (1100-1250ºC for 38-120 minutes).

After the firing stage a ceramic tile is obtained which shows specific aesthetic characteristics with iridescent effects imitating those seen in 'iris quartz' or 'rainbow quartz' due to the presence of microcracks.

The different colour tones in the pieces obtained by applying the above-described coatings can vary depending on the nature and content of the colouring agents included in the ceramic coatings.

## BRIEF DESCRIPTION OF THE DRAWINGS

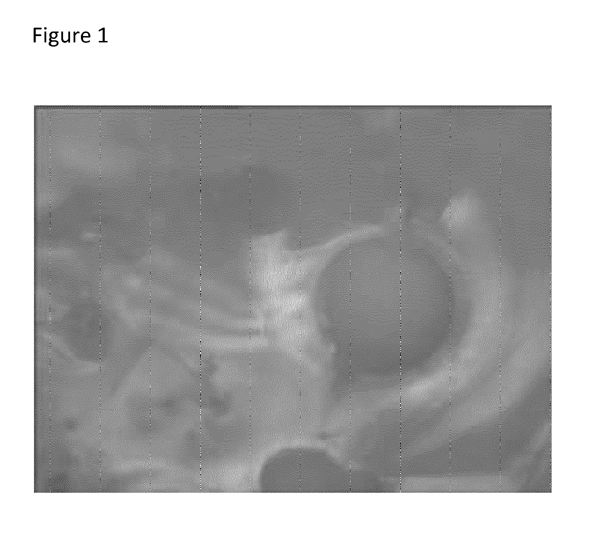

FIGURE 1 shows a view with a stereoscopic microscope showing the presence of microcracks on the surface of a tile obtained by applying the coating object of the present invention, specifically by the execution explained as Example 1 in the following section of this specification.

## DESCRIPTION OF AN EMBODIMENT OF THE INVENTION

To improve the comprehension of the invention, two embodiments are described by way of example and in a non-limiting sense.

## Example 1:

Mixture of opaque frit, clay, quartz, zirconium silicate and nepheline.

The mixture is introduced in a ball mill with sufficient water and additives (CMC adhesive and tripolyphosphate) to obtain a suspension with a density above 1850 grams/litre and for enough time to obtain a residue under 6 % in a 45 micron sieve.

The raw materials are introduced in the following proportions (percentage by weight with respect to total mixture):

| | |
|---|---|
| Opaque frit | 12.4 % |
| Clay | 9.33 % |
| Quartz | 31.33 % |
| Zirconium silicate | 17.2 % |
| Nepheline | 29.73 % |

50 grams of the resulting enamel are applied using the bell jar application technique on a ceramic tile of porcelain stoneware with dimensions 33x33 cm.

Subsequently a mixture is prepared weighing 79.2 grams of a micronised ceramic composed of:

| | |
|---|---|
| $SiO_2$ | .60 % |
| $B_2O_3$ | 9 % |

(continued)

| | |
|---|---|
| Al2O3 | 11 % |
| CaO | 7.6 % |
| ZnO | 3.7 % |
| Na2O | 3.7 % |
| K2O | 5 % |

All of this together with 4.13 grams of zinc oxide and 16.67 grams of ceramic spheres with the composition:

| | |
|---|---|
| SiO2 | 29 % |
| ZrO2 | 69 % |
| Al2O3 | 2 % |

and grain size from 60 to 130 microns.

To this mixture are added 45 grams of a mixture of synthetic polymers as a serigraphic vehicle.

After homogenising the mixture, it is applied on the ceramic tile with the aid of a serigraphy flat screen with 15 wires.

It is then applied with the help of a water fixing suspension with adhesive and a 100-gram sandblaster using shiny transparent grain with grain size from 100 to 320 microns on the porcelain stoneware ceramic tile with dimensions 33x33 cm. The composition of this grain as a percentage of oxides is:

| | |
|---|---|
| SiO2 | 61.8 % |
| B2O3 | 1.3 % |
| Al2O3 | 6.2 % |
| CaO | 15.3 % |
| MgO | 1.6 % |
| ZnO | 9.2 % |
| Na2O | 0.3 % |
| K2O | 4.3 % |

When the tile is dry it is subjected to a firing cycle in an industrial kiln at 1200ºC for 65 minutes.

**Example 2:**

A mixture is prepared of shiny transparent frit, kaolin and alumina in the following proportions (percentage by weight with respect to total mixture):

| | |
|---|---|
| Shiny transparent frit | 91.3 % |
| Kaolin | 6.7 % |
| Alumina | 2.0 % |

The mixture is introduced in a ball mill with sufficient water and additives (CMC adhesive and tripolyphosphate) to obtain a suspension with a density above 1800 grams/litre and for enough time to obtain a residue under 7 % in a 45 micron sieve.

40 grams of the resulting enamel are applied using the bell application technique on a ceramic tile of porcelain stoneware with dimensions 33x33 cm.

Subsequently a mixture is prepared weighing 74 grams of a micronised ceramic composed of:

| | |
|---|---|
| SiO2 | ..60 % |
| B2O3 | .. 9 % |
| Al2O3 | 11 % |
| CaO | 7.6 % |
| ZnO | 3.7 % |
| Na2O | 3.7 % |
| K2O | 5 % |

together with 3.5 grams of zinc oxide, 3.5 grams of micronised clay, 5 grams of cobalt blue pigment and 14 grams of ceramic spheres with the composition:

| | |
|---|---|
| ZrO2 | 93 % |
| Y2O3 | 5 % |
| Other | 2 % |

and grain size from 120 to 200 microns.

To this mixture are added 53 grams of a mixture of synthetic polymers as a serigraphic vehicle.

After homogenising the mixture, it is applied on the ceramic tile with the aid of a serigraphy flat screen with 15 wires.

It is then applied with the help of a water fixing suspension with adhesive and a 100-gram sandblaster with the same grain used in the previous example on the porcelain stoneware ceramic tile with dimensions 33x33 cm.

When the tile is dry it is subjected to a firing cycle in an industrial kiln at 1190ºC for 55 minutes.

The resulting ceramic piece presents a coating with a bluish iridescent appearance.

Observing this piece under a stereoscopic microscope allows seeing the presence of microcracks.

**Claims**

1. COATING FOR CERAMIC BODIES **characterised in that** its composition comprises a mixture of oxides obtained from frits, raw materials, additives, colouring agents and, as substantial elements of this composition, some particles with different expansion coefficients that can undergo phase changes in the firing stage.

2. COATING FOR CERAMIC BODIES as claimed in claim 1, **characterised in that** the particles comprise at least one of the following oxides: zinc oxide, silicon oxide, zirconium oxide, yttrium oxide, halfnium oxide or cerium oxide.

3. COATING FOR CERAMIC BODIES as claimed in claim 1, **characterised in that** the particles have a size between 20 and 500 microns and preferably between 50 and 350 microns.

4. COATING FOR CERAMIC BODIES as claimed in claim 1, **characterised in that** the particles present different morphology.

5. COATING FOR CERAMIC BODIES as claimed in claim 1, **characterised in that** the particles are preferably ceramic spheres with a zirconium oxide content greater than 50% by weight, ceramic spheres of zirconium oxide stabilised with yttrium oxide, ceramic spheres of zirconium oxide stabilised with cerium or a mixture of said three types of ceramic spheres.

6. COATING FOR CERAMIC BODIES **characterised in that** it is fired it presents a structure of microcracks.

7. COATING FOR CERAMIC BODIES as claimed in claim 6, **characterised in that** the structure of microcracks is suitable for obtaining optical effects.

8. COATING FOR CERAMIC BODIES as claimed in claim 1, **characterised in that** it is presented, among other forms, as powder, suspension in organic or inorganic medium, frit, granulate, palletised, sinterised or atomised.

9. COATING FOR CERAMIC BODIES as claimed in claim 1, **characterised in that** it comprises colouring agents.

10. CERAMIC PIECE OBTAINED BY THE USE of the coating described in claims 1 to 9, applied by any method specific to the ceramic industry and after a firing procedure specific to each ceramic piece on which it is applied, **characterised in that** it has a surface on which iridescent or multi-colour optical effects are generated.

Figure 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 200034145 B
- JP 7149585 B
- JP 5269953 B
- CN 101973711
- KR 20040080628
- WO 2006045130 A
- ES 2168148
- WO 2011150145 A
- US 4775648 A
- US 4506024 A

**Non-patent literature cited in the description**

- **CLEVELAND ; BRADT.** *J. Amer. Cer.,* 1978, vol. 61, 478
- **V. TVERGAARD ; J.W. HUTCHINSON.** Microcracking in Ceramics Induced by Thermal Expansion or Elastic Anisotropy. *Journal of the American Ceramic Society,* March 1988, vol. 71 (3